**Europäisches Patentamt**

**European Patent Office**

**Office européen des brevets**

(19)

(11) Numéro de publication : **0 408 505 B1**

(12)
# FASCICULE DE BREVET EUROPEEN

(45) Date de publication du fascicule du brevet :
02.03.94 Bulletin 94/09

(51) Int. Cl.⁵ : **G05B 19/405, G05B 19/10**

(21) Numéro de dépôt : **90810510.9**

(22) Date de dépôt : **05.07.90**

(54) **Machine à coudre informatisée.**

(30) Priorité : **11.07.89 CH 2580/89**

(43) Date de publication de la demande :
**16.01.91 Bulletin 91/03**

(45) Mention de la délivrance du brevet :
**02.03.94 Bulletin 94/09**

(84) Etats contractants désignés :
**CH DE ES FR GB IT LI NL SE**

(56) Documents cités :
EP-A- 0 147 087
US-A- 4 413 574
US-A- 4 660 488

(73) Titulaire : **MEFINA S.A.**
**5a Boulevard de Pérolles**
**CH-1700 Fribourg (CH)**

(72) Inventeur : **Tschopp, Gérard**
**c/o Dussex, 10, rue du Contrat-Social**
**CH-1203 Geneve (CH)**
Inventeur : **Buchilly, Claude**
**15, rue des Deux Marchés**
**CH-1800 Vevey (CH)**
Inventeur : **Kohli, Christian Robert**
**14B, route de Jussy**
**CH-1226 Thonex (CH)**

(74) Mandataire : **Dousse, Blasco et al**
**7, route de Drize**
**CH-1227 Carouge/Genève (CH)**

EP 0 408 505 B1

Jouve, 18, rue Saint-Denis, 75001 PARIS

## Description

L'invention concerne une machine à coudre informatisée, comprenant les premiers moyens pour commander, d'une part, le mouvement axial alterné d'une aiguille à coudre en vue de la faire pénétrer dans un matériau à coudre, d'autre part, un capteur de boucle destiné à coopérer avec cette aiguille en vue d'obtenir la formation d'un point de couture, des seconds moyens pour commander le déplacement relatif de l'aiguille et du matériau selon deux directions orthogonales, d'amplitude déterminée dans chaque direction, au moins une mémoire électronique dans laquelle sont stockées des instructions informatisées de couture, correspondant à une pluralité de motifs différents, ces instructions étant destinées à être lues sélectivement et séquentiellement pour assurer le pilotage desdits seconds moyens, des premiers organes de sélection desdits motifs, un microprocesseur destiné à la lecture, dans la mémoire, des instructions de couture correspondant à un motif sélectionné par lesdits premiers organe de manière à piloter, en conséquence, les seconds moyens pour obtenir ainsi la couture de ce motif sur ledit matériau, machine dans laquelle au moins une partie des motifs susceptibles d'être cousus sont constitués par des lettres ou des signes appartenant au moins à deux alphabets de types différents, des seconds organes permettant de choisir alternativement l'un ou l'autre alphabet pour la couture de toute lettre ou signe susceptible d'être sélectionné à l'aide des premiers organes.

On connait déjà diverses machines à coudre présentant l'ensemble de ces caractéristiques.

C'est notamment le cas de celle décrite dans les brevets US 4,660,488 et 4,413,574.

C'est également le cas de machines à coudre mises assez récemment sur le marché par exemple sous les dénominations "Memory Craft 6000" ou "Memory Craft 7000" par la Société Janome Sewing Machine industry, ou encore sous la dénomination "Creative 1473 CD" de la société allemande Pfaff.

Ces machines permettent bien d'effectuer la sélection d'un type d'alphabet, parmi plusieurs, deux ou trois selon les cas, en particulier d'alphabets dont les lettres et les signes qu'ils englobent se présentent dans un style différent d'alphabet en alphabet, mais souffrent de deux inconvénients importants, à savoir

- même si elles permettent de choisir des lettres parmi plusieurs alphabets disponibles, elles n'offrent pas la possibilité de coudre, pour tous les styles disponibles à la fois des lettres majuscules et des lettres minuscules,
- la couture d'un même type de caractère ou signe successivement dans les divers styles oblige à refaire l'opération de sélection de ce caractère ou signe préalablement à tout choix de type d'alphabet.

La présente invention propose précisément une machine à coudre informatisée telle que définie précédemment permettant d'obvier aux inconvénients cités.

Les caractéristiques essentielles font l'objet des revendications 1 à 4.

Le dessin annexé représente, à titre d'exemple, une forme d'exécution de l'objet de la présente invention:

la figure 1 en est une élévation de face;

la figure 2, est une vue de détail, à plus grande échelle de la fig. 1;

la figure 3 est une vue schématique de certains éléments de la partie informatisée de la machine;

la figure 4 montre un détail de la fig. 3, à plus grande échelle.

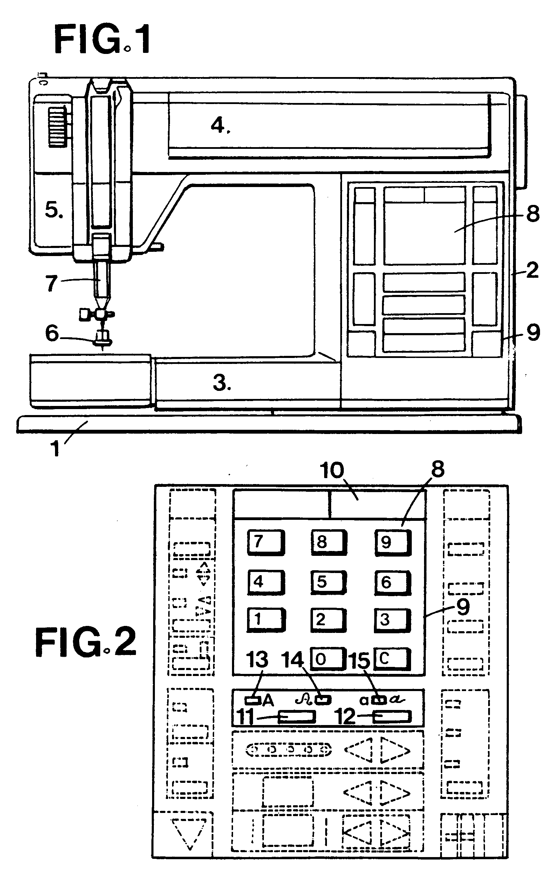

La machine représentée sur la figure 1 comporte, de façon traditonnelle, un socle 1 sur lequel se dresse une colonne 2 portant un bras libre 3 et un bras supérieur 4 à l'extrémité duquel est disposée une tête de couture 5.

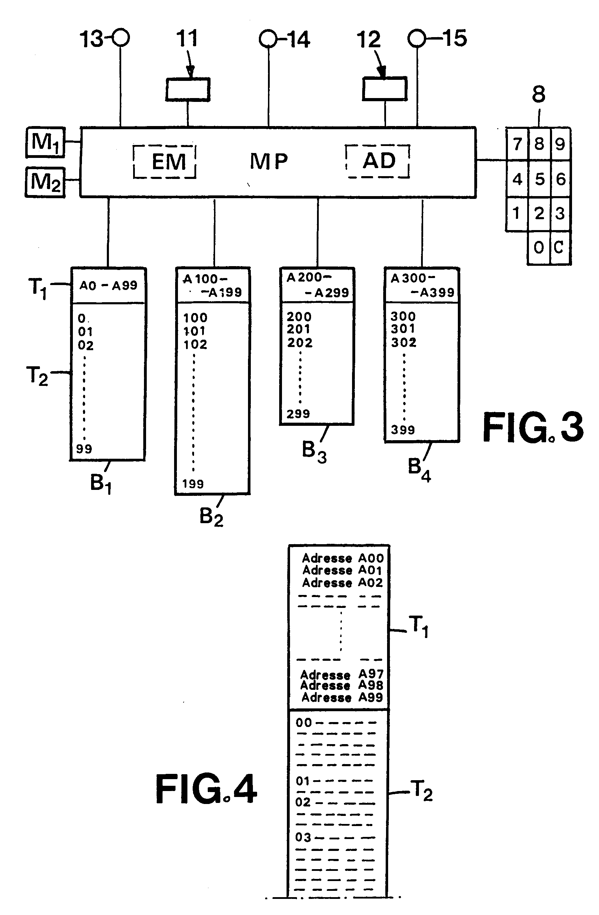

Dans le bras libre est placé un mécanisme, $M_1$ (fig. 3), pour la commande d'un dispositif d'entraînement en translation du matériau à coudre, non représenté. Dans ce bras, se trouve également un dispositif capteur de boucle, non représenté.

De façon connue, le capteur de boucle est appelé à coopérer en synchronisme avec une aiguille mobile 6 fixée à l'extrémité d'une barre-aiguille 7 entraînée en mouvement vertical et transversal (mouvement de jetée) par un mécanisme de commande $M_2$ (fig. 3) disposé dans la tête 5 et dans le bras 4.

La machine à coudre représentée est une machine à commande par microprocesseur MP (fig. 3), c'est-à-dire une machine dans laquelle les différentes données des motifs à coudre sont stockées dans une mémoire électronique ROM ou PROM par exemple (fig. 4), et qui peuvent être appelées, pour l'exécution par la machine d'un motif correspondant, par programmation manuelle à l'aide d'un clavier numérique 8 comportant dix touches 0 à 9 (figures 1 et 2) ainsi qu'une touche d'effacement C, le tout faisant partie d'un tableau de commande 9 disposé sur la face antérieure de la colonne 2 de la machine.

Un tel tableau comporte, usuellement, une pluralité d'autres touches de commande et d'affichages destinés à permettre la mise en action et/ou la visualisation des caractéristiques propres à chaque fonction et/ou de leur bon déroulement. En l'espèce, les affichages et les touches concernés par la présente invention ont été représentés en trait plein au dessin, les autres éléments étant esquissés en traitillé.

C'est ainsi que la machine représentée comporte encore deux touches 11 et 12 auxquelles font pendant, pour la touche 11, deux diodes luminescentes 13 et 14, et une diode luminescente unique 15, pour la touche

EP 0 408 505 B1

12.

La touche 11 permet la sélection de l'un ou l'autre parmi deux types d'alphabets disponibles, soit un alphabet englobant des lettres et des signes (par exemple chiffres de 0 à 9, virgule, point, point d'interrogation, point d'exclamation, tiret etc) se présentant sous la forme de caractères "bloc" par exemple, et un second alphabet dans lequel ces mêmes lettres et signes sont, par exemple, de style italique.

Lorsque c'est le premier type d'alphabet qui est sélectionné, la diode 13 est allumée et la diode 14 éteinte. Si la sélection a porté sur l'alphabet de caractères "italiques", la diode 14 sera allumée et la diode 13 éteinte.

La touche 12 permet, une fois effectuée la sélection du style de caractères désiré, de choisir si les caractères et plus particulièrement si les lettres de l'un ou l'autre types d'alphabet disponibles devront être cousues en majuscules ou, au contraire, en minuscule.

Si la diode 15 est éteinte, cela signifiera que les caractères choisis seront cousus en majuscules; une simple pression exercée sur la touche 12 amènera la machine à coudre les caractères choisis, et essentiellement les lettres, en minuscule. La diode 15 sera alors allumée.

Dans ce cas, il suffira d'actionner, à nouveau, la touche 12 pour que la machine couse des caractères, et notamment, des lettres majuscules: la diode 15 sera éteinte.

Lors de la mise en service de la machine à coudre selon l'invention, seule la diode 13 est allumée ce qui signifie que la machine coudra toute lettre sélectionnée en caractères "bloc", sous leur forme majuscule.

Selon une particularité essentielle de la présente invention, le choix du caractère à coudre, du style de ce caractère et, notamment pour les lettres, du fait qu'il devra être cousu en majuscule ou en minuscule, s'effectue de la manière ci-après:
- il est d'abord procédé à l'introduction, par le clavier 8, d'un code digitalisé caractéristique du caractère, lettre ou signe, désiré
- on actionne seulement ensuite les touches 11 et 12 de la manière et aux fins décrites ci-dessus.

Il convient, à ce point, de relever que, avec la machine selon l'invention,
- le code digitalisé attribué à chaque caractère reste identique quel que soit le type d'alphabet qui sera sélectionné et que les lettres à coudre soient en majuscules ou en minuscules,
- la sélection effectuée grâce aux touches 11 et 12 peut être modifiée à plaisir tant que l'ordre de couture n'aura pas été donné à la machine (c'est-à-dire tant que l'usager n'aura pas agi sur l'actuateur prévu à cet effet) sans que l'on ait à intervenir à nouveau sur le clavier 8 pour procéder, une nouvelle fois, à la sélection du caractère à coudre.

Les particularités ci-dessus ainsi que d'autres caractéristiques spécifiques de la machine selon l'invention vont maintenant être illustrées en se référant aux figures 3 et 4 du dessin annexé dans lequel on retrouve le clavier 8, les touches 11 et 12 ainsi que les diodes luminescentes 13, 14 et 15, le microprocesseur MP, et les mécanismes $M_1$ et $M_2$ déjà cités.

$B_1$, $B_2$, $B_3$ et $B_4$ sont des blocs de la mémoire morte ROM ou PROM par exemple, contenant notamment les instructions de couture destinées à être lues par le microprocesseur MP et à partir desquelles celui-ci pilotera les mécanismes $M_1$ et $M_2$ dont dépend la commande de la machine.

Comme on le voit au dessin, chaque bloc de mémoire $B_1$ à $B_4$ est en substance, subdivisé en deux parties, soit en une table d'adresses, $T_1$, et en une table de motifs $T_2$ disposée à la suite de la première.

Comme cela est bien connu de l'homme du métier, spécialiste informaticien des machines à coudre modernes, la table $T_1$ contient, indiquées dans un ordre croissant, correspondant dans l'exemple représenté aux numéros 0 à 99, 100 à 199, 200 à 299 et 300 à 399 pour les quatre blocs, de mémoire $B_1$, $B_2$, $B_3$ et $B_4$ respectivement, l'adresse dans la table $T_2$ du début de la section de mémoire dans laquelle sont stockées les instructions de couture propres à chaque motif disponible.

Comme on le sait, ces instructions englobent généralement une entête du motif dans laquelle le microprocesseur MP trouvera différentes instructions concernant plus particulièrement la gestion des différentes fonctions de la machine qui seront propres au motif considéré, telles sa vitesse de couture, la longueur et la largeur de base du motif ainsi que leurs variations possibles, l'affichage du type de pied recommandé pour la couture du motif choisi etc.

A la suite de cette entête, le microprocesseur trouvera, pour les n points du motif, les indications fixant, pour chaque point à coudre, l'importance du déplacement relatif, selon deux directions orthogonales, de l'aiguille à coudre et du matériau sur lequel devra être cousu le motif, par exemple du tissu.

S'agissant d'une machine à coudre dans laquelle l'aiguille est fixée à une barre mobile axialement montée sur un berceau oscillant, ces indications seront
- l'amplitude et le sens du mouvement de jetée auquel devra être soumis le berceau et, partant, l'aiguille à coudre,
- l'amplitude du pas et le sens du mouvement de transport du matériau à coudre

Selon l'invention, les instructions de couture des quatres types d'alphabets disponibles par action sur les

3

touches 11 et 12 (soit caractères "blocs" avec lettres majuscules, caractères "italiques" avec lettres majuscules, caractères "blocs" avec lettres minuscules, caractères "italiques" avec lettres minuscules) sont disposées dans les quatre blocs de mémoire $B_1$ à $B_4$ dont l'adresse d'entrée du premier bloc est 00 et dont l'écart séparant celle d'entrée des trois autres blocs $B_2$, $B_3$ et $B_4$ de l'adresse d'entrée du premier bloc est respectivement de 100, 200 et 300 unités. En variante, cet écart pourrait, bien entendu, être différent pour chaque bloc: il sera évidemment tel que les blocs de mémoire n'empiètent pas les uns sur les autres.

Selon une autre caractéristique essentielle de la présente invention, l'indication dans la table d'adresses $T_1$ de l'adresse à laquelle on trouvera dans la table $T_2$ correspondante les instructions informatisées pour la couture de chaque caractère occupera, dans la table d'adresses $T_1$ des blocs $B_2$, $B_3$ et $B_4$ la même position que dans la table d'adresses du bloc de mémoire $B_1$, ainsi, le caractère dont l'indication d'adresse dans la table $T_1$ du bloc de mémoire $B_1$ sera accessible à la position 40 à partir de l'entrée de cette table, soit si l'adresse de cette entrée est 000 dans la mémoire, à l'adresse 040, se retrouvera dans la table d'adresses $T_1$ du bloc de mémoire $B_2$ à la position 40 de cette table ou à l'adresse (100 + 40) = 140 de la mémoire, à l'adresse 240 pour le bloc de mémoire $B_3$ et à l'adresse 340 pour le bloc $B_4$.

Dans la section $T_2$ du bloc de mémoire correspondant, les instructions de couture qu'on trouvera à l'adresse fournie par la table $T_1$ permettront aussi de coudre le même caractère dans un style différent (bloc ou italique) et en majuscule ou minuscule selon les blocs.

A titre d'exemple, les blocs $B_1$ et $B_2$ contiennent les instructions de couture des alphabets avec lettres majuscules et caractères "bloc" et "italique" respectivement; les blocs $B_3$ et $B_4$ sont, eux, relatifs aux instructions de couture des alphabets avec lettres minuscules et caractères "bloc" et "italique" respectivement.

Au dessin, la différence de longueur des blocs de mémoire $B_1$ et $B_2$ est essentiellement due au fait que, le tracé des caractères en "italique" étant plus complexe que celui des caractères "bloc", les instructions de couture des premiers occuperont plus de place "mémoire" que dans le cas des seconds.

Cela est d'ailleus déjà vrai, à l'intérieur de chaque bloc de mémoire, de caractère à caractère: on comprend par exemple que les instructions de couture d'une lettre telle la lettre A, soient plus complexes que celles relatives à la couture d'un signe aussi simple qu'un point. La figure 4 montre précisément la différence de place "mémoire" occupée par des caractères différents.

Selon une autre caractéristique essentielle de la présente invention, la sélection d'une lettre ou signe à coudre, avec quelque type d'alphabet que ce soit, s'opère par formation au clavier 8 de codes univoques, identiques pour tous les alphabets, caractérisant l'ordre occupé par l'indication de l'adresse de cette lettre ou signe dans la table $T_2$ donnée par la table d'adresses $T_1$ du bloc $B_1$, c'est-à-dire du bloc contenant les instructions de couture des caractères dans l'alphabet de caractères "blocs", lettres majuscules. Il s'agit, comme décrit, de l'alphabet de "default" accessible sans autres dès la mise en service de la machine.

A titre d'exemple, si les instructions des caractères "blocs" sont mémorisées à des adresses comprises entre 25 et 60, il suffira d'introduire, au clavier 8 le numéro de l'adresse de chaque caractère, pour voir le microprocesseur accéder aux instructions de couture commençant à cette adresse dans la section $T_2$ du bloc de mémoire et faire procéder à la couture du motif correspondant.

Par exemple, la lettre A pourra être sélectionnée en introduisant le code univoque 25, la lettre B, le code 26 et ainsi de suite. Ce code sera le même, comme indiqué, que l'on désire coudre le caractère correspondant en bloc majuscule, en bloc minuscule, en italique majuscule ou en italique minuscule, par actionnement correspondant des touches 11 et 12.

En effet, selon l'invention, le microprocesseur MP connait le type d'alphabet sélectionné par l'usager en examinant, à chaque instant, l'état dans lequel se trouvent les diodes lumineuses 13, 14 et 15. Le microprocesseur peut en effet savoir, de façon connue, si une diode est allumée ou éteinte, notamment en contrôlant les variations de la différence de potentiel existant aux bornes de la diode, variations correspondant précisément à l'état allumé ou éteint de la diode considérée.

Dans le cas de la machine décrite et au vu des explications déjà données précédemment, les informations que pourra obtenir le microprocesseur par contrôle de l'état des diodes 13, 14 et 15 sont données par le tableau ci-après dans lequel la lettre A correspond à un état allumé d'une diode et la lettre E à un état éteint.

DIODES

| | 13 | | 14 | | 15 | | ALPHABET SELECTIONNE |
|---|---|---|---|---|---|---|---|
| | A | E | A | E | A | E | |
| a) | X | | | X | | X | "Bloc" MAJUSCULE |
| b) | X | | | X | X | | "Bloc" minuscule |
| c) | | X | X | | | X | "Italique" MAJUSCULE |
| d) | | X | X | | X | | "Italique" minuscule |

A partir du résultat de cette investigation, le microprocesseur va chercher l'adresse à laquelle il va trouver, pour le caractère sélectionné au clavier 8, les instructions de couture correspondantes dans l'alphabet choisi, c'est-à-dire dans le bloc de mémoire $B_1$ à $B_4$ propre à cet alphabet.

A cet effet, le microprocesseur contient notamment une mémoire élémentaire EM dans laquelle est stockée, pour chacun des quatre résultats d'investigation <u>a</u>, <u>b</u>, <u>c</u> et <u>d</u> indiqués au tableau ci-dessus, quelle est la valeur de l'écart séparant l'entrée de chaque bloc de mémoire $B_1$ à $B_4$ de l'entrée du bloc $B_1$ qui est celui de l'alphabet de "défaut" dont l'ordre des adresses a été choisi pour la codification univoque du clavier 8.

Dans le cas particulier, cet écart est égal à 0 pour le bloc $B_1$. Il pourrait, bien entendu, être différent si c'était par exemple le bloc $B_2$ qui aurait été choisi pour l'alphabet de "défaut".

Dans le cas des blocs $B_2$, $B_3$ et $B_4$, la valeur de l'écart cité sera respectivement de 100, 200 et 300. Il pourrait être différent si les blocs $B_1$ à $B_4$ devaient occuper une position différente dans la mémoire.

Si l'investigation du microprocesseur conclut par exemple au résultat <u>c</u>, ce microprocesseur prendra en considération l'écart 200 mémorisé dans l'élément de mémoire EM.

Le microprocesseur va alors procéder, dans une cellule illustrée schématiquement par le rectangle AD, à l'addition de la valeur de cet écart, ici 200, et de celle de la codification du caractère choisi par action sur le clavier 8, par exemple le numéro 25 pour la lettre A. Le résultat total, soit 225, correspondra pour le microprocesseur à l'endroit exact où il va trouver dans la table d'adresses $T_1$ du bloc $B_3$, la valeur de l'adresse, dans la table de motifs $T_2$ de ce bloc, où débutent les instructions correspondant à la couture de la lettre A, en caractère minuscule de style "bloc".

Si, toujours à titre d'exemple, l'investigation du microprocesseur concluait au resultat <u>a</u>, l'écart à prendre en considération serait nul, de sorte que, toujours pour la lettre A, dont le code univoque entré par action du clavier 8 est 25, le microprocesseur chercherait son adresse sur la vingt-cinquième information de la table d'adresses $T_1$ du bloc $B_1$.

Ainsi, avec la machine à coudre décrite, il est effectivement possible, de dissocier l'opération de sélection du caractère à coudre de celle du type d'alphabet avec lequel ce caractère devra être cousu. En effet, cette dernière est absolument indépendante de la première et pourra donc être modifiée au gré de l'usager après sélection du caractère désiré, tant que l'ordre de couture n'aura pas été donné à la machine.

Bien que dans la description qui précède et dans les dessins qui y font référence, on n'ait envisagé que le cas d'une machine à coudre n'offrant que la possibilité de coudre des caractères, lettres, chiffres ou signes divers, dans deux styles bien déterminés (caractères "bloc" ou "italiques", majuscules et minuscules), il est évident que les principes exposés sont applicables, mutatis mutandis, à la construction de machines permettant de coudre des caractères selon des polices en nombre quelconque, supérieur à deux, à condition, bien entendu, de prévoir, pour l'usager, des moyens de sélection adéquats de chaque police de caractères disponibles donnant un signal univoque de chaque sélection ou non sélection d'une police correspondant notamment à celui livré par les diodes 13 à 15 de l'exécution décrite. A chaque police de caractères devra correspondre un bloc de mémoire accessible par le microprocesseur de la façon décrite au vu des signaux univoques

5

perçus.

De tels moyens pourraient par exemple présenter une structure similaire à celle du dispositif de sélection décrit notamment dans le brevet US 4,005,664.

**Revendications**

1. Machine à coudre informatisée, comprenant :
   - des premiers moyens pour commander, d'une part, le mouvement axial alterné d'une aiguille à coudre en vue de la faire pénétrer dans un matériau à coudre, d'autre part, un capteur de boucle destiné à coopérer avec cette aiguille en vue d'obtenir la formation d'un point de couture,
   - des seconds moyens pour commander le déplacement relatif de l'aiguille et du matériau selon deux directions orthogonales, d'amplitude déterminée dans chaque direction,
   - au moins une mémoire électronique dans laquelle sont stockées des instructions informatisées de couture, correspondant à une pluralité de motifs différents, ces instructions étant destinées à être lues sélectivement et séquentiellement pour assurer le pilotage desdits seconds moyens,
   - des premiers organes pour la sélection desdits motifs,
   - un microprocesseur destiné à la lecture, dans la mémoire, des instructions de couture correspondant à tout motif présélectionné par lesdits organes, pilotant en conséquence les seconds moyens pour obtenir ainsi la couture ou motif désiré sur ledit matériau, machine dans laquelle au moins une partie des motifs susceptibles d'être sélectionnés est constituée par des lettres et des signes appartenant à au moins deux alphabets de style différent, des seconds organes permettant de sélectionner le type d'alphabet avec lequel doit être cousue la lettre ou le signe sélectionné par les premiers organes, caractérisée en ce que les instructions de couture des motifs de chaque alphabet sont englobées dans un bloc de mémoire propre dont l'adresse de référence de son début est différente pour chaque alphabet, chaque bloc de mémoire comportant une section d'adresses de localisation, dans le bloc, des indications destinées auxdits seconds moyens en vue d'assurer la couture des divers signes et lettres que comprend l'alphabet, les indications des adresses étant disposées, dans ladite section, dans un ordre prédéterminé, propres à chaque lettre ou signe, identique pour chaque alphabet,
   en ce que les premiers organes comprennent un clavier de sélection par formation de codes univoques d'identification numérique du motif choisi, les codes attribués aux divers signes ou lettres correspondant à l'ordre des indications d'adresses attribué à ces lettres et signes dans la section d'adresses du bloc de mémoire de l'un desdits alphabets, de base,
   en ce que les organes de sélection du type d'alphabet désiré englobent un élément de mémoire contenant au moins une première valeur, caractéristique de l'adresse dans la mémoire électronique, du début du bloc de mémoire englobant les données des caractères de l'alphabet de base, et au moins une seconde valeur correspondant à l'écart, dans la mémoire, séparant le début dudit bloc de mémoire de l'alphabet de base et le début du bloc de mémoire englobant les données des caractères de l'autre alphabet disponible,
   en ce que des moyens indiquent au microprocesseur le type d'alphabet sélectionné et
   en ce que des moyens sont prévus pour former une valeur d'adresse composite, par addition de ladite première valeur ou de cette première valeur et de ladite seconde valeur stockée dans l'élément de mémoire, selon le type d'alphabet sélectionné et indiqué au microprocesseur, à la valeur du code univoque caractéristique du caractère sélectionné par le clavier, cette adresse composite correspondant, dans la section d'adresses du bloc de mémoire de l'alphabet sélectionné, à celle de la partie de cette section indiquant l'adresse de la portion de mémoire contenant des instructions spécifiques au pilotage par le microprocesseur desdits seconds moyens nécessaires à la couture du motif correspondant au caractère désiré dans le type d'alphabet sélectionné.

2. Machine selon la revendication 1, caractérisée en ce que la mémoire électronique comporte au moins quatre blocs de mémoire distincts dont les deux premiers englobent des indications informatisées relatives à des lettres majuscules et à des signes appartenant à des alphabets dont les motifs sont de style différent de bloc à bloc, les troisième et quatrième blocs de mémoire englobant des indications informatisées relatives à des lettres minuscules et à des signes dont les motifs sont de style identique à celui de l'un des alphabets des deux premiers blocs de mémoire, pour le troisième, et identique à celui de l'autre alphabet desdits deux premiers blocs, pour le quatrième bloc de mémoire.

3. Machine selon la revendication 2, caractérisée en ce que les seconds organes de sélection englobent, de plus, un premier moyen de sélection du type d'alphabet désiré et un second moyen de sélection du caractère majuscule ou minuscule des lettres du type d'alphabet sélectionné.

4. Machine selon la revendication 3, caractérisée en ce que les moyens d'indication du type d'alphabet sélectionné comprennent deux premières diodes luminescentes associées au premier moyen de sélection, l'une concernant le premier alphabet et, l'autre, le second, et une troisième diode luminescente associée au second moyen de sélection, le premier moyen permettant d'assurer alternativement l'allumage et l'extinction de l'une des deux premières diodes, simultanément à l'extinction et à l'allumage de l'autre diode, respectivement, l'autre moyen permettant d'assurer alternativement l'allumage et l'extinction de la troisième diode, et en ce que le microprocesseur est branché sur le circuit d'alimentation en courant des diodes de manière à former, pour chacune d'elles, un signal caractéristique de la valeur de leur tension d'alimentation, la combinaison des signaux ainsi perçus étant caractéristique du type de moyens de sélection actionnés et du mode de leur actionnement.

**Patentansprüche**

1. Rechnergestützte Nähmaschine, aufweisend:
   - erste Mittel zum Steuern der alternierenden Axialbewegung einer Nähnadel, um sie in ein zu nähendes Material eindringen zu lassen, einerseits, und einen Schleifensensor, andererseits, der zum Zusammenwirken mit der Nadel bestimmt ist, um die Bildung eines Nähstiches zu erhalten,
   - zweite Mittel zum Steuern der relativen Verschiebung der Nadel und des Materials gemäß zweier orthogonaler Richtungen mit einer in jeder Richtung bestimmten Amplitude,
   - mindestens einen elektronischen Speicher, in dem informatisierte Nähanweisungen entsprechend einer Vielzahl unterschiedlicher Muster gespeichert sind, wobei diese Anweisungen dazu bestimmt sind, selektiv und sequentiell gelesen zu werden, um die Steuerung der zweiten Mittel zu bewirken,
   - erste Glieder zum Wählen der genannten Muster,
   - einen Mikroprozessor, der zum Lesen der im Speicher enthaltenen Nähanweisungen entsprechend jedem durch die genannten Glieder vorgewählten Muster bestimmt ist, und demgemäß die zweiten Mittel steuert, um auf diese Weise das Nähen des gewünschten Musters auf dem Material zu erreichen, wobei in der Maschine mindestens ein Teil der wählbaren Muster aus Buchstaben und Zeichen besteht, die mindestens zwei Alphabeten unterschiedlichen Stils angehören, und wobei es zweite Glieder ermöglichen, den Alphabettyp zu wählen, mit dem der durch die ersten Glieder gewählte Buchstabe oder das gewählte Zeichen genäht werden soll,
   dadurch **gekennzeichnet**, daß
   die Anweisungen zum Nähen der Muster jedes Alphabets in einem eigenen Speicherblock vereinigt sind, dessen Bezugsadresse für seinen Anfang bei jedem Alphabet verschieden ist, wobei jeder Speicherblock einen Adressenteil zur Lokalisierung der Angaben im Block aufweist, die für die zweiten Mittel im Hinblick auf die Durchführung des Nähens der verschiedenen Zeichen und Buchstaben bestimmt sind, die das Alphabet enthält, wobei die Angaben der Adressen in dem genannten Teil in einer vorbestimmten Reihenfolge angeordnet sind, die für jeden Buchstaben oder für jedes Zeichen eigentümlich und für jedes Alphabet identisch ist,
   daß die ersten Glieder eine Tastatur zum Wählen des gewählten Musters durch Bilden eindeutiger digitaler Identifikationscodes aufweisen, wobei die den verschiedenen Zeichen oder Buchstaben zugeordneten Codes der Reihenfolge der Adressenangaben entsprechen, die diesen Buchstaben und Zeichen im Adressenteil des Speicherblocks des einen der Alphabete, dem Basisalphabet, zugeordnet sind,
   daß die Glieder zum Wählen des gewünschten Alphabettyps ein Speicherelement umfassen, das mindestens einen Wert, der die Adresse im elektronischen Speicher kennzeichnet, für den Anfang des Speicherblocks enthält, der die Daten der Schriftzeichen des Basisalphabets enthält, und mindestens einen zweiten Wert entsprechend dem Abstand im Speicher enthält, der den Anfang des Speicherblpcks des Basisalphabets und den Anfang des die Schriftzeichen des anderen verfügbaren Alphabets enthaltenden Speicherblocks trennt,
   daß Mittel den gewählten Alphabettyp dem Mikroprozessor anzeigen, und
   daß Mittel zur Bildung eines zusammengesetzten Adressenwertes durch Addieren des im Speicherelement gespeicherten ersten Wertes, oder des ersten Wertes und des zweiten Wertes entsprechend dem gewählten und dem Mikroprozessor angezeigten Alphabettyps zum Wert des von der Tastatur gewählten eindeutigen, für das Schriftzeichen charakteristischen Code vorgesehen sind, wobei diese zusammengesetzte Adresse, im Adressenteil des Speicherblocks des gewählten Alphabets, derjenigen des Adressenteils entspricht, der die Adresse des-Abschnittes des Speichers anzeigt, welcher die für die Steuerung der zweiten Mittel durch den Mikroprozessor spezifischen Anweisungen enthält, die für das Nähen des dem gewünschten Schriftzeichen im gewählten Alphabettyp entsprechenden Musters nötig sind.

2.  Maschine nach Anspruch 1,
    dadurch **gekennzeichnet**, daß
    der elektronische Speicher mindestens vier unterschiedliche Speicherblöcke umfaßt, von denen die beiden ersten informatisierte Angaben in bezug auf große Buchstaben und Zeichen enthalten, die zu Alphabeten gehören, deren Muster von Block zu Block unterschiedlichen Stil aufweisen, während die dritten und vierten Speicherblöcke informatisierte Angaben in bezug auf kleine Buchstaben und auf Zeichen enthalten, deren Muster einen Stil besitzen, der beim dritten Speicherblock mit demjenigen des einen der Alphabete der beiden ersten Speicherblöcke identisch ist, und der beim vierten Speicherblock mit demjenigen des anderen Alphabetes der beiden ersten Blöcke identisch ist.

3.  Maschine nach Anspruch 2,
    dadurch **gekennzeichnet**, daß
    die zweiten Wählglieder weiter ein erstes Mittel zum Wählen des Typs des gewünschten Alphabets, und ein zweites Mittel zum Wählen des großen oder kleinen Schriftzeichens der Buchstaben des gewählten Alphabets.

4.  Maschine nach Anspruch 3,
    dadurch **gekennzeichnet**, daß
    die Mittel zur Anzeige des gewählten Alphabettyps zwei erste Leuchtdioden aufweisen, die dem ersten Wählmittel zugeordnet sind, von denen die eine das erste Alphabet und die andere das zweite Alphabet betrifft; und daß sie eine dritte Leuchtdiode aufweisen, die dem dritten Wählmittel zugeordnet ist, wobei es das erste Mittel ermöglicht, alternativ das Zünden und das Löschen der einen der beiden ersten Dioden gleichzeitig mit dem Löschen und dem Zünden der anderen Diode zu bewirken, bzw. das andere Mittel alternativ das Zünden und das Löschen der dritten Diode ermöglicht; und daß der Mikroprozessor an die Schaltung zur Versorgung der Dioden mit Strom angeschlossen ist, derart, daß er für jede der Dioden ein Signal erzeugt, das für den Wert ihrer Speisespannung kennzeichnend ist, wobei die Kombination der so wahrgenommenen Signale charakteristisch für den Typ der betätigten Wählmittel und für die Art ihrer Betätigung ist.

## Claims

1.  Computerized sewing machine, comprising:
    - first means for controlling, on the one hand, the alternating axial movement of a sewing needle with a view to making it penetrate into a material to be sewn, and on the other hand, a loop pick-up device for cooperating with this needle with a view to achieving the formation of a sewing stitch,
    - second means for controlling the relative displacement of the needle and of the material in two orthogonal directions, with a specific amplitude in each direction,
    - at least one electronic memory in which computerized sewing instructions are stored, these instructions corresponding to a plurality of different patterns and being intended to be read selectively and sequentially to ensure monitoring of said second means,
    - first units for the selection of said patterns,
    - a microprocessor for reading from the memory sewing instructions corresponding to any pattern preselected by said first unit, consequently monitoring the second means to thus obtain sewing of the desired pattern on said material, a machine in which at least some of the patterns capable of being selected are formed by letters and signs belonging to at least two alphabets of different styles, second units enabling selection of the type of alphabet with which the letter or the sign selected by the first units is to be sewn,
    characterized in that the sewing instructions for the patterns of each alphabet are contained in a specific storage block whereof the reference address for the beginning is different for each alphabet, each storage block comprising an address section, for locating, in the block, information intended for said second means with a view to effecting sewing of the various signs and letters comprised in the alphabet, the address information being arranged, in said section, in a predetermined order, individual to each letter or sign and identical for each alphabet,

in that the first units comprise a keyboard for selecting, by formation of unique digital identification codes for the chosen pattern, with the codes assigned to the various signs or letters corresponding to the address information order assigned to these letters and signs in the address section of the storage block of one of the said basic alphabets,

in that the selection units for the type of alphabet desired contain a memory element containing at least one first value, characteristic of the address in the electronic memory, of the beginning of the storage block containing the data for the characters of the basic alphabet, and at least one second value corresponding to the space, in the memory, separating the beginning of said storage block for the basic alphabet from the beginning of the storage block containing the data for the characters of the other alphabet available,

in that means signify to the microprocessor the type of alphabet selected, and

in that means are provided for forming a composite address value by adding said first value or this first value and said second value stored in the memory element, according to the type of alphabet selected and signified to the microprocessor, to the value of the unique code characteristic of the character selected by the keyboard, this composite address corresponding, in the address section of the storage block for the alphabet selected, to that of the part of this section indicating the address of the portion of memory containing instructions specific to the monitoring of said second means by the microprocessor, these instructions being those necessary for sewing the pattern corresponding to the character desired in the type of alphabet selected.

2. Machine according to Claim 1, characterized in that the electronic memory comprises at least four distinct storage blocks whereof the first two contain computerized information relating to upper-case letters and to signs belonging to alphabets whereof the patterns are of different style from block to block, the third and fourth storage blocks containing computerized information relating to lower-case letters and to signs whereof the patterns are of identical style to that of one of the alphabets of the two first storage blocks, in the case of the third storage block, and identical to that of the other alphabet of said two first blocks, in the case of the fourth storage block.

3. Machine according to Claim 2, characterized in that the second units contain, in addition, a first means for selecting the type of alphabet desired and second means for selecting upper-case or lower-case characters for the letters of the type of alphabet selected.

4. Machine according to Claim 3, characterized in that the means for signifying the type of alphabet selected comprise two first light-emitting diodes associated with the first selection means, one relating to the first alphabet and the other relating to the second alphabet, and a third light-emitting diode associated with the second selection means, the first means enabling the alternate illumination and extinguishing of one of the two first diodes simultaneously with the extinguishing and illumination of the other diode respectively, the other means enabling the alternate illumination and extinguishing of the third diodes, and in that the microprocessor is connected to the circuit for supplying current to the diodes so as to form, for each of them, a signal characteristic of the value of their supply voltage, the combination of the signals thus perceived being characteristic of the type of selection means actuated and of the mode of their actuation.

# FIG.1

# FIG.2

FIG.3

FIG.4